# EUROPÄISCHE PATENTANMELDUNG

(11) **EP 4 459 150 A1**
(43) Veröffentlichungstag der Anmeldung: **06.11.2024**
(21) Anmeldenummer: 24172676.9
(22) Anmeldetag: 26.04.2024
(51) Int. Cl.: F16D 69/02, C23C 24/04, C23C 4/04, C23C 4/12, F16D 65/12, C23C 4/06, C23C 4/134, C23C 4/131, C23C 24/08, C23C 28/02, C23C 4/10, C23C 4/02, C23C 4/129, F16D 69/00

(54) **BREMSKÖRPER FÜR EIN KRAFTFAHRZEUG SOWIE VERFAHREN ZUR HERSTELLUNG EINES BREMSKÖRPERS**

(30) Priorität: 03.05.2023 DE 102023204087
(71) Anmelder: VOLKSWAGEN AG, 38440 Wolfsburg (DE)
(72) Erfinder: Harke, Markus, 38106 Braunschweig (DE)

(57) **Zusammenfassung**

Die Erfindung betrifft einen Bremskörper (1) für ein Kraftfahrzeug, mit einem zumindest bereichsweise flächenhaften Grundkörper (G), auf dessen Flächenseiten (Fa) jeweils zumindest bereichsweise wenigstens zwei Aufbauschichten (B1, B2) aufgebracht sind. Durch die Aufbauschichten (B1, B2) wird eine Oberfläche ausgebildet, die im Montagezustand des Bremskörpers (1) am Kraftfahrzeug als Reibfläche (12) für einen Bremsbelag dient. Es besteht eine Anbindungszone (A), in der sowohl ein Material des Grundkörpers (G) als auch ein Material einer an diesen angrenzenden Aufbauschicht (B1) vorhanden sind. Die zweite Aufbauschicht (B2) besteht aus einem Verbund aus einer Eisenlegierungsmatrix (E) mit eingelagerten Wolframkarbidpartikeln (W).

Erfindungsgemäß weist das Volumen der eingelagerten Wolframkarbidpartikel (W) zum Volumen der Eisenlegierungsmatrix (E) einen Anteil in einem Bereich von 1 % bis 19 % auf.

Des Weiteren wird ein Verfahren zur Herstellung eines Bremskörpers vorgeschlagen.

## Beschreibung

Die Erfindung betrifft einen Bremskörper für ein Kraftfahrzeug mit den Merkmalen vom Oberbegriff des Patentanspruchs 1. Die Erfindung betrifft auch ein Verfahren zur Herstellung eines solchen Bremskörpers mit den Merkmalen vom Oberbegriff des Patentanspruchs 8.

Bremskörper, wie beispielsweise Bremsscheiben bzw. Bremsscheibenreibringe werden üblicherweise aus Grauguss hergestellt. Den Vorteilen des Graugusses, insbesondere der hohen volumetrischen Wärmekapazität und der relativen Thermoschockbeständigkeit, stehen verschiedene Nachteile gegenüber. Zu diesen zählen das hohe Gewicht, die starke Korrosionsneigung und der hohe Verschleiß des Materials im Betrieb eines Kraftfahrzeugs.

Durch Korrosion kommt es zu optischen Mängeln, da der Bremskörper das einzige Teil am Kraftfahrzeug ist, das bereits nach kürzester Zeit Rotrost ausbildet. Zusätzlich sind Bremsscheiben durch die häufig eingesetzten, offenen Aluminiumfelgen direkt einsehbar.

Bei sparsamer Fahrweise oder bei großen Rekuperationsanteilen (wenn nur selten gebremst wird) wird die Korrosionsneigung des Werkstoffs unter Umständen zu einer derart großen Beschädigung des Bremskörpers, dass dieser frühzeitig ausgetauscht werden muss.

Des Weiteren führt der Reibungsverschleiß eines Bremskörpers zu einer Emission von Feinstaub, dessen Menge die Feinstaubemissionen eines modernen Verbrennungsmotors deutlich übersteigen kann.

Um diese Nachteile zu beseitigen ist es bislang bekannt, neben der vollständigen Substitution des Materials des Bremskörpers durch harte und korrosionsbeständige Werkstoffe (wie beispielsweise Keramik) auch die Reibflächen des Bremskörpers mit einer geeigneten Beschichtung zu schützen.

So gibt es verschiedene Lösungsansätze für Beschichtungen, insbesondere der besonders beanspruchten Reibflächen des Bremskörpers, welche zum kombinierten Verschleiß- und Korrosionsschutz dienen sollen. Die Beschichtung erfolgt durch thermische Spritzverfahren zur Applikation von oxidkeramischen oder hartstoffhaltigen Beschichtungen. So werden verschiedene Beschichtungsmaterialien auf Basis metallischer Legierungen oder Verbunden aus Keramik- oder Hartmetallpartikeln in metallischer Matrix genutzt, die ein verbessertes Verhalten gegenüber Korrosion und Verschleiß bieten.

Als thermische Spritzverfahren sind beispielsweise das Hochgeschwindigkeitsschlammspritzen, das Plasmaspritzen, Kaltgasspritzen oder das Lichtbogendrahtspritzen zu nennen.

Problematisch bei thermisch gespritzten Beschichtungen ist oftmals die Haftung der Schicht auf dem Substrat bei den großen thermomechanischen Belastungen, die auf den Bremskörper wirken. Hierzu sind Lösungen bekannt, bei denen die Oberfläche des Bremskörpers vor dem thermischen Spritzen durch Strahlen mit einem Hartstoffgranulat (DE 10 2008 035 894 A1), durch eine Ultraschall-/Laserstrahlbehandlung (DE 10 2011 089 152 A1) oder durch eine Elektronenstrahlbehandlung (DE 10 2011 012 320 A1) aufgeraut wird.

Weiterhin ist es zur Steigung der Haftung der thermisch gespritzten Beschichtung bekannt, eine Haftvermittlerschicht als Zwischenschicht zu verwenden. Dies ist z. B. aus der DE 10 2011 089 923 A1 bekannt, bei der als Basis für eine thermisch gespritzte Verschleißschutzschicht eine chemische oder elektrochemisch kalt abgeschiedene Zwischenschicht aus Nickel, Kupfer und/oder Chrom beschrieben wird.

Die Haftung einer thermisch gespritzten Schicht beruht - unabhängig vom Aufrauverfahren oder der Verwendung einer Zwischenschicht - nahezu ausschließlich auf dem Prinzip der mechanischen Verklammerung der auftreffenden Spritzpartikel auf das Substrat.

Eine wesentlich stärkere Anbindung ist durch eine metallurgische Bindung möglich, für die der Einsatz von thermischer Energie notwendig ist, um den atomaren Diffusionsprozess an der Grenzfläche zwischen Substrat und Beschichtung zu ermöglichen. Dabei stehen zwei Alternativen zur Auswahl:
Einerseits kann das Substrat vor dem Spritzprozess erwärmt werden, so dass der Diffusionsprozess direkt beim Auftreffen der Spritzpartikel ablaufen kann (vergleiche beispielsweise DE 10 2008 035 849 A1).

Die zweite Möglichkeit ist ein Einschmelzprozess, bei dem die Erwärmung nach dem Spritzvorgang stattfindet, wie es in der DE 10 2005 008 569 A1 beschrieben wird.

Nachteilig bei dem Einspritzverfahren ist ein sehr aufwändiger zusätzlicher Prozessschritt, da hohe Temperaturen benötigt werden und der Prozess teilweise im Vakuumofen durchgeführt werden muss.

Außer den thermisch gespritzten Beschichtungen wird in der DE 10 2006 035 948 A1 eine elektrolytisch aufgebrachte Beschichtung beschrieben, bei der Hartstoffe in einer duktilen metallischen Matrix eingebettet werden. Probleme bei dieser Lösung können eine schlechte Haftung und eine sehr geringe Duktilität der Beschichtung sein, was zu einem Abplatzen der Beschichtung im Betrieb führen kann. Weiterhin ist es verfahrensbedingt schwer und mit hohen Kosten verbunden, die erforderlichen Schichtdicken zu erreichen.

Als weitere Alternative wird in der DE 10 345 000 A1 ein Auftragsschweißverfahren mittels Laserstrahl-, Plasma- oder Lichtbogen-Auftragsschweißen für eine Verschleißschutzschicht beschrieben. Durch eine Energiequelle wird das Trägermaterial (Substrat) aufgeschmolzen und der Beschichtungsstoff wird dem Schmelzbad im festen Zustand zugeführt. Alternativ wird vorgeschlagen, das Trägermaterial nach Aufbringen des Beschichtungswerkstoffes aufzuschmelzen. Die Beschichtung kann aus einem metallischen, keramischen oder einem Verbundmaterial bestehen und vollflächig oder auch streifenförmig aufgebracht werden. Auf Grund von lokal großen Temperaturwechseln durch den Prozess können in Beschichtungen mit hoher Härte oder hohen Hartstoffanteilen ausgeprägte Risse auftreten, die das Eindringen von korrosiven Medien zum Grundmaterial ermöglichen und einen erheblichen optischen Mangel bedeuten.

In der EP 3 034 902 B1 wird eine mehrlagige Beschichtung für Bremsscheiben mittels Laserauftragsschweißen beschrieben. Dabei wird eine Basisschicht, die keine hochschmelzenden Teilchen enthält, direkt auf die Bremsscheibe aufgebracht. Auf dieser Basislage wird dann eine weitere Schicht aufgebracht, die Teilchen mit einem höheren Schmelzpunkt als der Scheibenhauptkörper der Bremsscheibe aufweist.

Aus der DE 10 2019 208 411 A1 ist eine Bremsscheibe für eine Reibbremse eines Kraftfahrzeugs bekannt, welche einen Basiskörper aufweist. Der Basiskörper ist mit einer Verschleißschutzschicht versehen, die Hartstoffpartikel aufweist und über einer Reibkontaktfläche aufgebracht ist. Zwischen der Reibkontaktfläche und der Verschleißschutzschicht ist eine Zwischenschicht aus austenitischem oder teil-austenitischem Chrom-Nickel-Stahl vorhanden. Die Zwischenschicht ist mittels Laserauftragsschweißen auf den Basiskörper aufgebracht Die Zwischenschicht weist neben Eisen als Basiswerkstoff mindestens 10 Gew.-% Chrom sowie mindestens 4 Gew.-% Nickel auf und hat eine Schichtdicke von weniger als 150 µm. Die Verschleißschutzschicht ist aus einer Chromstahl-Matrix gebildet, in der Keramikpartikel, vorzugsweise Karbidpartikel eingelagert sind.

In der DE 10 2014 015 474 A1 ist eine beschichtete Bremsscheibe und ein Herstellungsverfahren dafür bekannt. Konkret besteht die Bremsscheibe aus einem Grauguss-Substrat, mit mehreren darauf angeordneten Oberflächenschichten. Die Oberflächenschichten umfassen eine Haftschicht, auf der eine Korrosionsschicht, eine optionale Oxidschicht und darauf wiederum eine Verschleißschutz- bzw. Reibschicht aufgebracht sind. Die Haftschicht besteht aus einem Material des Grauguss-Substrats mit einem auf 20 bis 60 Gew.-% erhöhten Anteil an Chrom oder Molybdän, wobei der überwiegende Anteil des lamellaren Kohlenstoffs des Graugusses in der Haftschicht als Cr- und/oder Mo-Carbid chemisch gebunden vorliegt. Die Korrosionsschutzschicht besteht aus nitriertem, nitridiertem oder nitrocarburiertem Haftschichtmaterial. Die nach der optionalen Oxidschicht vorhandene Verschleißschutz- bzw. Reibschicht ist aus Oxidkeramik oder einem sogenannten Cermet-Werkstoff aus keramischem Werkstoff in einer metallischen Matrix. Als metallische Matrix wird austenitischer, nichtrostender Stahl gemäß 1.4404 (EN10027-2) oder 316L (AISI) angegeben. Die Haftschicht wird durch Umschmelzen der mit Cr- und/oder Mo-Partikeln beaufschlagten Oberfläche des Grauguss-Substrats hergestellt.

Schließlich ist in der DE 10 2021 207 133 B3 der Anmelderin ein Bremskörper für ein Kraftfahrzeug mit den Merkmalen vom Oberbegriff des Patentanspruchs 1 und ein Verfahren zur Herstellung eines Bremskörpers mit den Merkmalen vom Oberbegriff des Patentanspruchs 8 bekannt.

Der vorliegenden Erfindung liegt die Aufgabe zu Grunde, einen Bremskörper für ein Kraftfahrzeug bereitzustellen, welcher eine Beschichtung mit einer hohen Verschleißbeständigkeit und einen hohen Korrosionsschutz aufweist und welche kostengünstig herstellbar ist. Insbesondere soll der Bremskörper bei hoher Verschleißbeständigkeit, geringer Rissneigung der zweiten Aufbauschicht auf Grund thermomechanischer Einwirkung und bei guten Emmisionswerten (Feinstaub) kostengünstig herstellbar sein. Des Weiteren ist es eine Aufgabe der vorliegenden Erfindung ein Verfahren zur Herstellung eines solchen Bremskörpers vorzuschlagen, welches kostengünstig durchführbar ist. Insbesondere sollen bevorzugte Schichtdicken des Bremskörpers prozesssicher erreicht werden.

Vorliegende Aufgaben werden durch einen Bremskörper mit den Merkmalen von Patentanspruch 1 und durch ein Verfahren zur Herstellung eines Bremskörpers mit den Merkmalen von Patentanspruch 8 gelöst. Vorteilhafte Ausbildungen beziehungsweise Weiterbildungen der Erfindung sind den jeweils abhängigen Ansprüchen zu entnehmen.

Hinsichtlich des Sachanspruchs geht die Erfindung von einem Bremskörper für ein Kraftfahrzeug aus, mit einem zumindest bereichsweise flächenhaften Grundkörper, auf dessen Flächenseiten jeweils zumindest bereichsweis (also zumindest im Bereich der von dem Bremsbelag überstrichenen Fläche) wenigstens zwei Aufbauschichten aufgebracht sind. Durch die Aufbauschichten wird eine Oberfläche ausgebildet, die im Montagezustand des Bremskörpers am Kraftfahrzeug als Reibfläche für einen Bremsbelag dient. Ferner besteht eine Anbindungszone, in der sowohl ein Material des Grundkörpers als auch ein Material einer an diesen angrenzenden Aufbauschicht vorhanden sind. Dabei ist eine erste Aufbauschicht vorhanden, die an den Grundkörper angrenzt und eine zweite Aufbauschicht, die auf die erste Aufbauschicht aufgebracht ist. Die zweite Aufbauschicht besteht aus einem Verbund aus einer Eisenlegierungsmatrix mit eingelagerten Wolframkarbidpartikeln.

Erfindungsgemäß wird nun vorgeschlagen, dass der Anteil des Volumens der eingelagerten Wolframkarbidpartikel zum Volumen der Eisenlegierungsmatrix in einem Bereich von etwa 1 Prozent bis etwa 19 Prozent, vorzugsweise in einem Bereich von etwa 8 Prozent bis etwa 18 Prozent liegt. Besonders bevorzugt wird ein Bereich von etwa 10 Prozent bis etwa 15 Prozent vorgeschlagen.

Es hat sich in zahlreichen Untersuchungen überraschenderweise herausgestellt, dass mit derartig niedrigen Bereichen gute Ergebnisse hinsichtlich Verschleißbeständigkeit, Korrosionsschutz, guten Reibwerten bei Einsatz des Bremskörpers und hinsichtlich geringen Emmisionswerten erzielt werden können, wobei gleichzeitig die Herstellkosten für den Bremskörper gesenkt werden können.

Nach einer sehr vorteilhaften Weiterbildung der Erfindung wird vorgeschlagen, dass die Anbindungszone eine Dicke senkrecht zu einer Flächenerstreckung einer Flächenseite aufweist, die unter 10 Mikrometer, vorzugsweise unter 5 Mikrometer beträgt.

Mit anderen Worten weist der Bremskörper in diesem Bereich der Beschichtung einen Aufmischungsgrad (Anteil des Werkstoffes vom Grundkörper im Material der angrenzenden Aufbauschicht) auf, welcher sehr niedrig liegt.

Durch das Vorhandensein einer derartigen Anbindungszone mit der besagten Dicke können negative Effekte (Kornbildung, Aufhärtung), welche durch eine Aufmischung des Substratmaterials auftreten können, verhindert werden. Dennoch kann eine gute Haftung der Aufbauschicht auf dem Grundkörper erzielt werden, wobei Haftzugfestigkeiten von weit über 50 MPa erreicht werden können. Dies trägt zu einer hohen Verschleißbeständigkeit und zu einem hohen Korrosionsschutz bei.

Als Bremskörper im Sinne der Erfindung können beispielsweise eine Bremsscheibe oder ein Bremsscheibenreibring verstanden werden.

Es wird nach einer Weiterbildung ferner vorgeschlagen, dass, senkrecht zu einer Flächenerstreckung einer Flächenseite gesehen, die erste Aufbauschicht eine Dicke in einem Bereich von etwa 50 Mikrometer bis etwa 350 Mikrometer, vorzugsweise eine Dicke in einem Bereich von etwa 80 Mikrometer bis etwa 350 Mikrometer, besonders bevorzugt in einem Bereich von etwa 121 Mikrometer bis etwa 350 Mikrometer und ganz besonders bevorzugt in einem Bereich von etwa 121 Mikrometer bis etwa 220 Mikrometer aufweist.

Die zweite Aufbauschicht weist, senkrecht zu einer Flächenerstreckung einer Flächenseite gesehen, nach einer weiteren Ausbildung des Erfindungsgedankens eine Dicke in einem Bereich von etwa 60 Mikrometer bis etwa 420 Mikrometer, vorzugsweise eine Dicke in einem Bereich von etwa 80 Mikrometer bis etwa 400 Mikrometer auf.

Es hat sich gezeigt, dass bei der Realisierung derartiger Dicken der Aufbauschichten, die erste Aufbauschicht den Zweck der Korrosionsschutzwirkung und der Hemmung von Anrissen aus der zweiten Aufbauschicht optimal erfüllen kann.

Mit der zweiten Aufbauschicht kann durch den besagten Dickenbereich eine hohe Verschleißbeständigkeit erzielt werden, was zu einer deutlichen Verringerung der Partikelemissionen aus dem Reibverschleiß des Bremskörpers führt.

In einer vorteilhaften Ausbildung des Erfindungsgedankens besteht die erste Aufbauschicht aus einem austenitischen Chrom-Nickel-Molybdän-Stahl. Dieser weist besonders duktile und zähe Eigenschaften auf, durch die eine Rissausbreitung gestoppt und somit der Grundkörper des Bremskörpers besser geschützt werden kann. Dieser Schutz ist essenziell, um das Substrat (den Grundkörper) vor einem korrosiven Angriff zu schützen und die Langlebigkeit des gesamten Bremskörpers zu gewährleisten.

Als besonders zweckmäßig hat sich dabei herausgestellt, wenn das Material der ersten Aufbauschicht solche Werkstoffeigenschaften aufweist, wie sie dem Werkstoff 1.4404 nach der Norm EN10027-2 oder dem Werkstoff 316L nach der Norm AISI entsprechen.

Als Material für die Eisenlegierungsmatrix hat es sich hier ebenfalls als zweckmäßig erwiesen, wenn diese aus einem Material besteht, welches solche Werkstoffeigenschaften besitzt, wie sie dem Werkstoff 1.4404 nach der besagten Norm EN10027-2 oder dem Werkstoff 316L nach der besagten Norm AISI entsprechen.

Wie anfangs erwähnt, soll mit der Erfindung auch ein Verfahren zur Herstellung eines erfindungsgemäßen Bremskörpers unter Schutz gestellt werden. Hierbei wird von einem Verfahren zur Herstellung eines Bremskörpers ausgegangen, wobei in einem ersten Verfahrensschritt mittels wenigstens einer Energiequelle wenigstens ein Energiestrahl auf eine Flächenseite eines flächenhaften Grundkörpers des Bremskörpers gerichtet wird. Der wenigstens eine Energiestrahl kann in Form eines Lichtstrahls (z. B. Laserstrahl) oder auch in Form eines Elektronenstrahls gewählt werden. Denkbar ist unter Umständen auch ein Plasmastrahl, wenngleich dieser deutlich schwieriger zu steuern beziehungsweise zu dosieren ist. Bevorzugt handelt es sich jedenfalls um einen hochenergetischen Energiestrahl.

Des Weiteren wird im ersten Verfahrensschritt ein erstes, pulverförmiges Beschichtungsmaterial einer durch den Energiestrahl beaufschlagten Position zugeführt, um das erste Beschichtungsmaterial aufzuschmelzen und auf diese Weise die Flächenseite des flächigen Grundkörpers des Bremskörpers mit einer ersten Aufbauschicht zu beschichten.

Nach Aufbringung der ersten Aufbauschicht wird in einem zweiten Verfahrensschritt mittels der wenigstens einen Energiequelle wenigstens ein (bevorzugt ebenfalls hochenergetischer) Energiestrahl auf eine Oberfläche der ersten Aufbauschicht gerichtet. Dabei wird ein zweites, pulverförmiges Beschichtungsmaterial einer durch den wenigstens einen Energiestrahl beaufschlagten Position zugeführt, um das zweite Beschichtungsmaterial aufzuschmelzen und die erste Aufbauschicht mit einer zweiten Aufbauschicht zu beschichten.

Um die bevorzugten Schichtdicken des Bremskörpers prozesssicher erreichen zu können, wird nach Merkmalen der Erfindung vorgeschlagen, dass das pulverförmige Beschichtungsmaterial mit einem Pulvermassenstrom zugeführt wird, der in einem Bereich von etwa 60 g/min bis etwa 400 g/min, vorzugsweise in einem Bereich von etwa 150 g/min bis etwa 400 g/min, besonders bevorzugt in einem Bereich von etwa 225 g/min bis etwa 400 g/min liegt.

Es wird nach einer Weiterbildung vorgeschlagen, dass eine Strahlungsintensität des Energiestrahls zumindest im zweiten Verfahrensschritt bei Erzeugung der zweiten Aufbauschicht in einem Bereich von etwa 700 W/mm² bis etwa 1700 W/mm², vorzugsweise in einem Bereich von etwa 1000 W/mm² bis etwa 1700 W/mm², besonders bevorzugt in einem Bereich von etwa 1505 W/mm² bis etwa 1700 W/mm² gehalten wird.

Es hat sich gezeigt, dass durch eine Einhaltung eines solchen Bereichs der Strahlungsintensität (also Strahlungsleistung bezogen auf den Strahlspotdurchmesser auf der Substratoberfläche) sichergestellt werden kann, dass die zweite Aufbauschicht nicht überhitzt. Als Folge einer Überhitzung löst sich nämlich das Wolframkarbid als Feststoffphase in eine Flüssigphase und bleibt in der Eisenlegierungsmatrix der zweiten Aufbauschicht gelöst. Auf Grund des aufgelösten Materials wird das Material der Eisenlegierungsmatrix so stark versprödet, dass Risse entstehen.

Auf Grund der gewählten Strahlungsintensität kann somit ein optimales Beschichtungsergebnis mit einer optimalen Qualität und mit einer optimalen Haftung der Aufbauschicht erzielt werden.

In einer Weiterbildung des Verfahrens wird zumindest im zweiten Verfahrensschritt der Energiestrahl derart auf das jeweilige Substrat abgegeben, dass sich auf der Auftrefffläche des Energiestrahls auf dem jeweiligen Substrat ein Laserspot mit einem äußeren Durchmesser in einem Bereich von etwa 2 mm bis etwa 7 mm, bevorzugt mit einem äußeren Durchmesser in einem Bereich von etwa 3,1 mm bis etwa 7 mm ergibt und besonders bevorzugt in einem Bereich von etwa 3,2 mm bis etwa 5 mm ergibt. Es ist dabei die Erzeugung einer Intensitätsverteilung des Energiestrahls bzw. des Laserspots mit einem Top-Hat-Profil denkbar. Sehr vorteilhaft kann auch eine kreisringförmiges Top-Hat-Profil erzeugt werden, bei dem in der Mitte des Laserspots die Intensität des Energiestrahls reduziert wird.

Ein Top-Hat-Profil ist ein solches Profil, bei dem die Intensitätsverteilung des auf das Substrat auftreffenden Energiestrahls (Strahlspot) über den Durchmesser des auftreffenden Energiestrahls gesehen eine in etwa konstante Höhe aufweist. Die Intensitätsverteilung steigt also nach Art eines Rechteckprofils sprunghaft von dem Wert Null auf einen Maximalwert an, bleibt über den Durchmesser des Laserstrahls in etwa konstant und fällt dann wieder sprunghaft auf den Wert Null ab.

Auf diese Weise lässt sich die Oberflächenrauheit der erzeugten Aufbauschicht deutlich reduzieren. Dies führt letztendlich zu einer möglichen Verringerung des Abtragens in einem anschließenden Schleifprozess der Oberfläche und damit zur weiteren Reduzierung der Kosten.

Die Pulverkörner des Beschichtungsmaterials liegen dabei vorzugsweise in sphärischer (kugelartiger) Form vor und werden bevorzugt in einem Größenbereich von etwa 10 µm bis etwa 90µm, besonders bevorzugt in einem Bereich von etwa 15 µm bis 50 µm gewählt.

In einer weiteren Ausbildung des Erfindungsgedankens wird vorgeschlagen, dass zur Aufbringung der Aufbauschichten der Bremskörper mit seinen Flächenseiten horizontal ausgerichtet und in Drehung versetzt wird. Dabei werden sowohl der Energiestrahl als auch das jeweilige Beschichtungsmaterial von oben auf eine Flächenseite des Bremskörpers zugeführt. Mit anderen Worten werden sowohl die Zuführung des Energiestrahls als auch die Zuführung des Beschichtungsmaterials zumindest im Wesentlichen in Richtung der wirkenden Gewichtskraft ausgerichtet.

Auf diese Weise wird es ermöglicht, dass das Beschichtungsmaterial so lange wie möglich dem Energiestrahl ausgesetzt ist und damit mit diesem bestmöglich interagieren kann.

Für eine optimale Wärmeentwicklung in dem Bremskörper während der Aufbringung der Aufbauschichten hat es sich als vorteilhaft herausgestellt, wenn die Aufbringung der Aufbauschichten durch eine radial von innen nach außen verlaufende Zustellbewegung eines Beschichtungswerkzeugs erfolgt.

Hierbei hat es sich hinsichtlich einer wirtschaftlichen Fertigung als vorteilhaft erwiesen, wenn die radiale Zustellbewegung des Beschichtungswerkzeugs in einer Geschwindigkeit erfolgt, die über etwa 90 m/min vorzugsweise über etwa 100 m/min liegt.

Um einerseits eine schnelle Durchführung des Verfahrens und andererseits eine lückenlose Beschichtung des Grundkörpers zu gewährleisten, hat es sich als zweckmäßig erwiesen, wenn eine radiale Zustellbewegung des Beschichtungswerkzeugs und eine Umdrehungsgeschwindigkeit des Bremskörpers derart aufeinander abgestimmt werden, dass sich im Lauf einer vollständigen Umdrehung des Bremskörpers eine Überlappung von einer im Lauf der Umdrehung aufgebrachten Beschichtungsspur zu einer zuvor (also bei einer vorausgegangenen vollständigen Umdrehung) aufgebrachten Beschichtungsspur in einem Bereich von etwa 70 Prozent bis etwa 95 Prozent, vorzugsweise in einem Bereich von etwa 70 Prozent bis etwa 90 Prozent und besonders bevorzugt in einem Bereich von etwa 70 Prozent bis etwa 84 Prozent ergibt.

Schließlich ist es gemäß einer anderen Ausbildung des Erfindungsgedankens auch denkbar, dass im zweiten Verfahrensschritt, also bei der Erzeugung der zweiten Aufbauschicht durch das zweite, pulverförmige Beschichtungsmaterial, ein die Wolframkarbidpartikel enthaltendes Pulvermaterial mit einer höheren Geschwindigkeit zugeführt wird als ein die Partikel der Eisenlegierungsmatrix enthaltendes Pulvermaterial. Zu diesem Zweck wird vorzugsweise der Förderstrang der beiden zugeführten Pulvermaterialien bis zur Düse getrennt ausgeführt und es erfolgt der Einsatz unterschiedlicher Fördergasmengen für die Pulver.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können. Wird der Begriff "und/oder" in einer Aufzählung aus zwei oder mehr Begriffen bzw. Gegenständen verwendet, so kann dies bedeuten, dass ein beliebiger der aufgezählten Begriffe bzw. Gegenstände allein verwendet werden kann. Es kann auch bedeuten, dass eine beliebige Kombination aus zwei oder mehr der aufgezählten Begriffe bzw. Gegenstände verwendet werden kann.

Es zeigen, jeweils schematisch
- Fig. 1: ein Kraftfahrzeug mit erfindungsgemäßen Bremskörpern,
- Fig. 2: ein Querschnitt eines Bremskörpers, in Einzeldarstellung,
- Fig. 3: eine Detaildarstellung gemäß Detail III aus Fig. 2,
- Fig. 4: die Darstellung eines Prozessschrittes im Herstellungsverfahren des Bremskörpers,
- Fig. 5: die Darstellung einer Intensitätsverteilung des Energiestrahls auf dem jeweiligen Substrat und
- Fig. 6: die Darstellung einer alternativen Intensitätsverteilung des Energiestrahls auf dem jeweiligen Substrat.

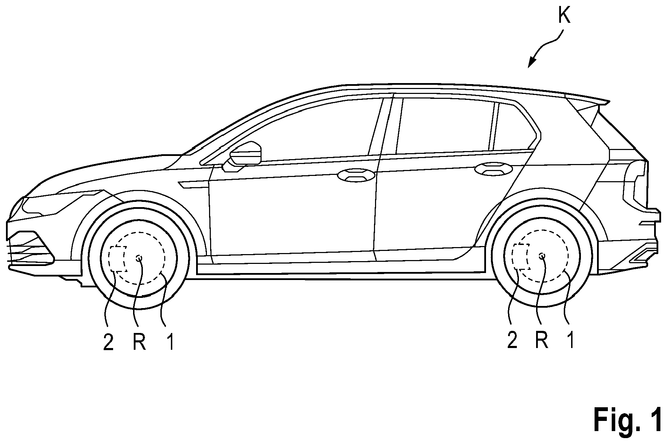

Es wird zunächst auf die Fig. 1 Bezug genommen. Darin ist ein Kraftfahrzeug K ersichtlich, welches mit erfindungsgemäßen Bremskörpern 1 ausgestattet ist. Die Bremskörper 1 sind als Scheibenbremsen ausgebildet und um eine Rotationsachse R rotierend an einem nicht näher dargestellten Radträger montiert. Bremssättel 2 enthalten jeweils zustellbare Bremsbeläge (nicht dargestellt), für die der Bremskörper 1 durch seine Bremsscheibenreibringe eine Reibfläche ausbildet. Wenn die Bremsbeläge gegen die Reibfläche der Bremskörper 1 gepresst werden, so wird das Kraftfahrzeug K abgebremst beziehungsweise gestoppt.

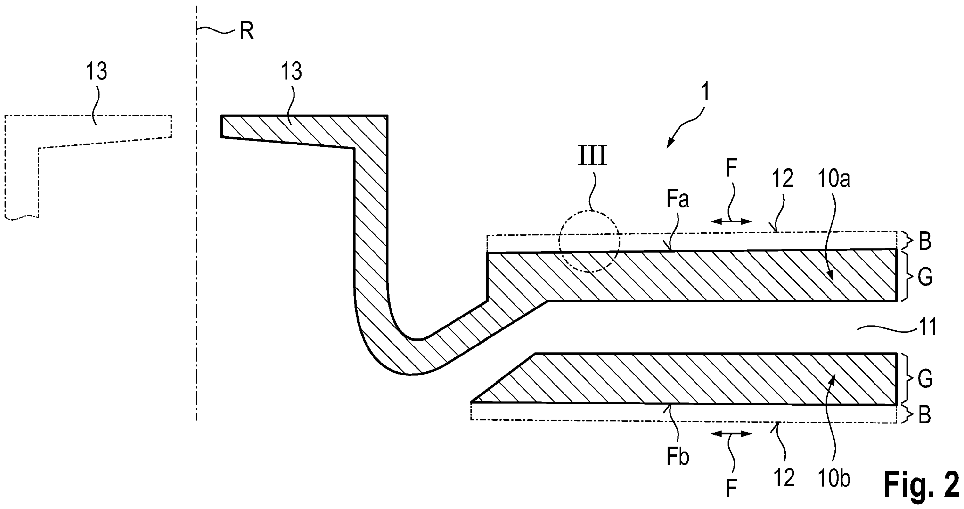

In der Fig. 2 ist ein Bremskörper 1 in Einzeldarstellung und im Querschnitt dargestellt. Der Bremskörper 1 dreht sich um die gedachte Rotationsachse R. Aus Gründen der Rotationssymmetrie ist nur eine Hälfte des Bremskörpers 1 dargestellt.

Es ist ersichtlich, dass der Bremskörper 1 im Ausführungsbeispiel als innenseitig belüftete Bremsscheibe ausgebildet ist, welche zwei Reibringe 10a und 10b aufweist. Abweichend vom Ausführungsbeispiel ist auch eine Bremsscheibe mit nur einem Reibring denkbar. Zwischen den Reibringen 10a, 10b ist ein Lüftungszwischenraum 11 vorhanden. Notwendige Abstandsrippen zwischen den Reibringen 10a, 10b sind nicht dargestellt. Jeder Reibring 10a, 10b weist einen flächigen Grundkörper G mit einer Flächenseite Fa beziehungsweise Fb auf. Jede Flächenseite Fa, Fb weist eine Flächenerstreckung F auf und ist mit einer Beschichtung B versehen. Durch die Beschichtung B wird jeweils eine beim Bremsen wirksame Reibfläche 12 ausgebildet.

Im Ausführungsbeispiel erstreckt sich die Beschichtung B jeweils über die gesamte Flächenseite Fa beziehungsweise Fb des Grundkörpers G. Abweichend davon ist es auch denkbar, dass die Beschichtung B nur auf dem Bereich der Flächenseiten Fa, Fb aufgebracht ist, der von den Bremsbelägen überstrichen wird.

Mit 13 ist eine Nabe des Bremskörpers 1 beziffert, die zur Montage des Bremskörpers 1 an einem nicht dargestellten Radträger dient.

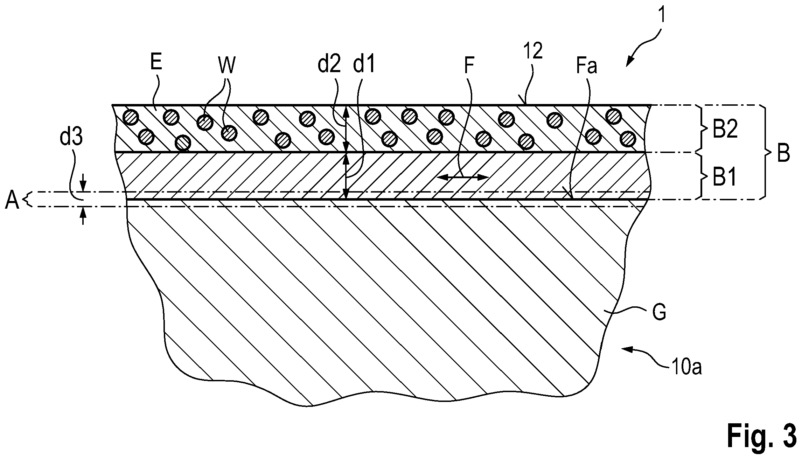

Aus der Fig. 3 ist nun ein Detailbereich aus dem Querschnitt des Bremskörpers 1 ersichtlich. Insbesondere ist erkennbar, dass die Beschichtung B aus einer ersten Aufbauschicht B1 und einer zweiten Aufbauschicht B2 besteht.

Die erste Aufbauschicht B1 ist unmittelbar auf den Grundkörper G aufgebracht, grenzt also unmittelbar an diesen an. Die zweite Aufbauschicht B2 ist wiederum auf die erste Aufbauschicht B1 aufgebracht.

Hierbei ist kenntlich gemacht, dass die erste Aufbauschicht B1, senkrecht zur Flächenerstreckung F der Flächenseite Fa (beziehungsweise Fb) eine Dicke d1 aufweist. Diese liegt bevorzugt in einem Bereich von etwa 50 Mikrometer bis etwa 350 Mikrometer liegt. Besonders bevorzugt weist die erste Aufbauschicht B1 eine Dicke d1 auf, welche in einem Bereich von etwa 80 Mikrometer bis etwa 350 Mikrometer, noch mehr bevorzugt in einem Bereich von etwa 121 Mikrometer bis etwa 350 Mikrometer und ganz besonders bevorzugt in einem Bereich von etwa 121 Mikrometer bis etwa 220 Mikrometer liegt.

Die zweite Aufbauschicht B2 hingegen weist eine Dicke d2 auf, welche vorzugsweise in einem Bereich von etwa 60 Mikrometer bis etwa 420 Mikrometer liegt. Besonders bevorzugt liegt die Dicke d2 in einem Bereich von etwa 80 Mikrometer bis etwa 400 Mikrometer.

Durch diese Schichtdickenbereiche kann durch die erste Aufbauschicht B1 der Zweck einer Korrosionsschutzwirkung und der Hemmung von Anrissen aus der zweiten Aufbauschicht B2 optimal erfüllt werden.

Der angegebene Dickenbereich der zweiten Aufbauschicht B2 erfüllt die Anforderung einer hohen Verschleißbeständigkeit, wodurch Partikelemissionen durch Reibungsverschleiß deutlich verringert werden können.

Ferner ist eine Anbindungszone A angedeutet, welche in einem Übergang zwischen dem Grundkörper G und der angrenzenden, ersten Aufbauschicht B1 liegt. Die Anbindungszone A ist dadurch gekennzeichnet, dass hier eine bestimmte Aufmischung zwischen dem Material des Grundkörpers G und dem Material der Beschichtung B1 stattfindet. Die Anbindungszone A weist eine Dicke d3 senkrecht zur Flächenerstreckung F auf, die nur sehr dünn ist und unter 10 Mikrometer liegt. Vorzugsweise weist die Anbindungszone A eine Dicke d3 auf, welche nur unter 5 Mikrometer liegt.

Es hat sich gezeigt, dass eine derartige geringe Dicke der Anbindungszone A eine Kornbildung und eine Aufhärtung der ersten Aufbauschicht B1 einerseits verhindert werden können und andererseits dennoch eine gute Haftung der ersten Aufbauschicht B1 auf dem Grundkörper G erzielbar ist. Es können Haftzugfestigkeiten von weit über 50 MPa erreicht werden. Hierdurch können die Grundvoraussetzungen für eine hohe Verschleißbeständigkeit und für einen hohen Korrosionsschutz bereitgestellt werden.

Im Folgenden soll nun näher auf die verwendeten Materialien eingegangen werden. So ist der Grundkörper G aus Grauguss hergestellt. Er wird mitsamt der Nabe 13 (vgl. Fig. 2) mit einem üblichen Gießverfahren hergestellt. Die erste Aufbauschicht B1 besteht aus einem austenitischen Chrom-Nickel-Molybdän-Stahl, der also eine besonders duktile und zähe Eisenlegierung darstellt.

Besonders bevorzugt weist das Material der ersten Aufbauschicht B1 solche Werkstoffeigenschaften auf, wie sie dem Werkstoff 1.4404 nach der Norm EN 10027-2 oder dem Werkstoff 316L nach der Norm AISI entsprechen.

Die zweite Aufbauschicht B2 besteht aus einem Verbund aus einer Eisenlegierungsmatrix E mit eingelagerten Wolframkarbidpartikeln W. Es hat sich insbesondere dabei als vorteilhaft erwiesen, wenn in der zweiten Aufbauschicht B2 das Volumen der eingelagerten Wolframkarbidpartikel W zum Volumen der Eisenlegierungsmatrix E einen Anteil in einem Bereich von etwa 1 Prozent bis etwa 19 Prozent liegt. Vorzugsweise liegt der Anteil des Volumens der eingelagerten Wolframkarbidpartikel W in einem Bereich von etwa 8 Prozent bis etwa 18 Prozent und besonders bevorzugt in einem Bereich von etwa 10 Prozent bis etwa 15 Prozent des Volumens der Eisenlegierungsmatrix E.

Durch eine derartige Volumenverteilung kann einerseits eine verstärkte Rissneigung in der zweiten Aufbauschicht B2 verhindert und andererseits der Verschleiß der zweiten Aufbauschicht B2 bei guten Reibwerten und niedrigen Emissionswerten begrenzt werden.

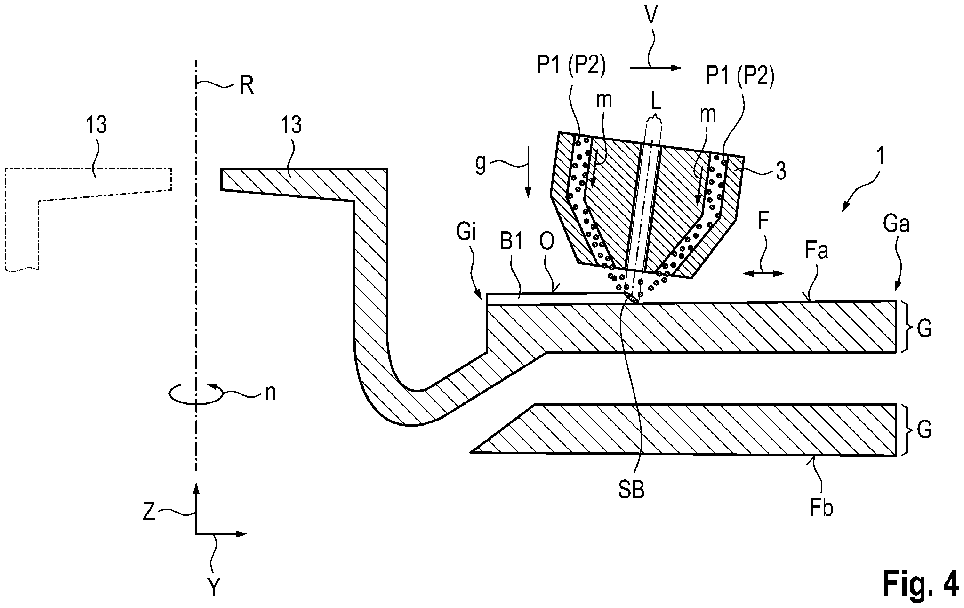

Anhand von Fig. 4 wird nun ein erster Prozessschritt in der Herstellung der Beschichtung B (vgl. Fig. 3) des Bremskörpers 1 erläutert. So wird zunächst mit Hilfe einer nicht näher dargestellten Vorrichtung der Grundkörper G des Bremskörpers 1 mit seiner Rotationsachse R vertikal, also in einer Hochrichtung Z ausgerichtet, derart, dass die Flächenseite Fa mit ihrer Flächenerstreckung F parallel zu einer Horizontalrichtung Y ausgerichtet ist.

Der Grundkörper G, also die unbeschichtete Bremsscheibe, wurde vorher nach dem üblichen Serienfertigungsprozess hergestellt (nicht näher erläutert).

In etwa parallel zur Rotationsachse R ist ein Beschichtungswerkzeug 3 vorhanden. Das Beschichtungswerkzeug 3 ist einachsig orthogonal beziehungsweise radial zur Rotationsachse R und parallel zur Horizontalrichtung Y beweglich. Es weist mindestens eine Laseroptik zur Erzeugung eines Laserstrahls L und eine Düse für den Ausstoß eines ersten, pulverförmigen Beschichtungsmaterials P1 (oder eines zweiten, pulverförmigen Beschichtungsmaterials P2) auf. An das Beschichtungswerkzeug 3 werden mindestens eine Laserquelle (nicht dargestellt) und mindestens ein Pulverförderer (nicht dargestellt) angeschlossen.

Anschließend wird der Grundkörper G in eine schnelle Rotation versetzt, so dass er sich mit einer bestimmten Drehzahl n um die Rotationsachse R dreht. Die Beschichtung des Grundkörpers G beginnt an einer radialen Innenposition Gi und wird durch eine radiale Zustellbewegung V in Richtung einer radialen Außenposition Ga des Grundkörpers G fortgesetzt.

Gleichzeitig mit der Erzeugung des Laserstrahls L wird der erwähnte Pulverförderer derart in Gang gesetzt, dass das erste, pulverförmige Beschichtungsmaterial P1 mit einem Pulvermassenstrom m gefördert wird, der in einem Bereich von etwa 60 g/min bis etwa 400 g/min, vorzugsweise im Bereich von etwa 225 g/min bis etwa 400 g/min und besonders bevorzugt im Bereich von etwa 225 g/min bis etwa 300 g/min liegt. Das erste, pulverförmige Beschichtungsmaterial P1 besteht aus Pulverkörnern mit sphärischer, also kugelförmiger Gestalt und besteht aus einem Material welches der herzustellenden, ersten Aufbauschicht B1 entspricht.

Je nach der momentanen Position des Beschichtungswerkzeugs 3 wird die Drehzahl n des Grundkörpers G angepasst, um eine über die gesamte zu beschichtende Fläche der Flächenseite Fa konstante Dicke der Aufbauschicht B1 zu erzielen.

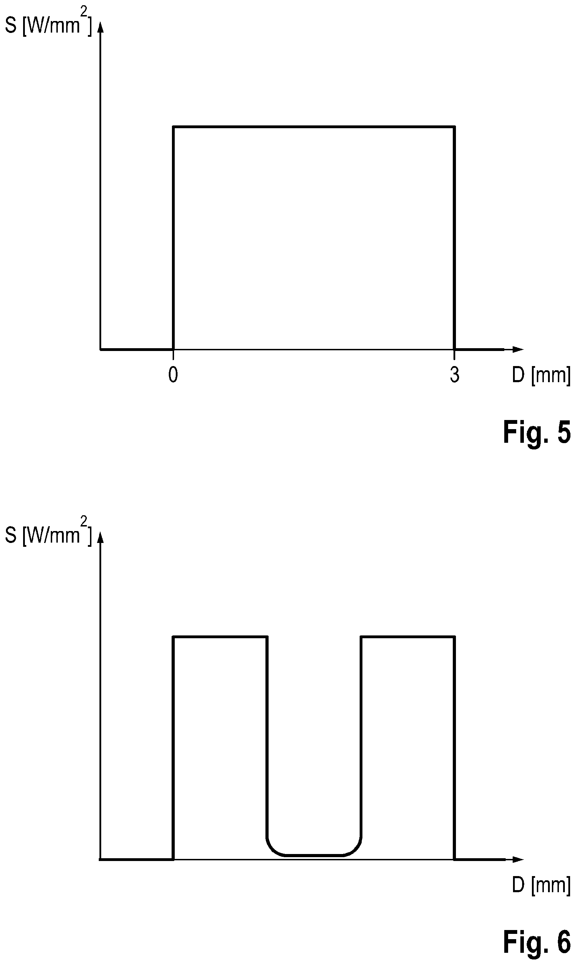

Beim Beschichtungsverfahren wird eine Strahlungsintensität S des Laserstrahls L (vergleiche auch Fig. 5) derart eingestellt, dass diese in einem Bereich von etwa 700 W/m² bis etwa 1700 W/mm², vorzugsweise in einem Bereich von etwa 1505 W/mm² bis etwa 1700 W/mm² liegt. Hierdurch wird sichergestellt, dass eine Überhitzung der jeweils aufzubringenden Aufbauschicht B1 beziehungsweise B2 nicht stattfindet.

Bei dem dargestellten Beschichtungsverfahren wird der Beschichtungswerkstoff, also das pulverförmige Beschichtungsmaterial P1 beziehungsweise P2 aufgeschmolzen. Dafür wird das pulverförmige Beschichtungsmaterial P1 beziehungsweise P2 durch das Beschichtungswerkzeug 3 gezielt dem auf den Grundkörper G auftreffenden Laserstrahl L, also dem Laserspot zugeführt. Dort wird das pulverförmige Beschichtungsmaterial P1 beziehungsweise P2 aufgeschmolzen und bildet ein Schmelzbad SB aus.

Der Grundkörper G hingegen bildet selbst kein Schmelzbad aus, sondern wird nur lokal bis auf eine Temperatur kurz unter seiner Schmelztemperatur erwärmt. Es kommt daher nicht zu einer Einbringung ungeschmolzener Partikel des pulverförmigen Beschichtungsmaterials P1 beziehungsweise P2 in eine Schmelze des Grundkörpers G, sondern zur Abscheidung eines Schmelzbades SB aus den Partikeln des pulverförmigen Beschichtungsmaterials P1 beziehungsweise P2. An der unmittelbaren Grenzfläche zwischen dem schmelzflüssigen Beschichtungsmaterial (im Bild P1) und der lokal stark erwärmten Oberfläche des Substrats (hier Grundkörper G) kommt es durch einen Diffusionsprozess zu einer sehr guten Anbindung des Beschichtungsmaterials (hier P1) an das Substrat (hier Grundkörper G), ohne dass eine erhöhte Aufmischung der beteiligten Materialien stattfindet.

Dadurch, dass das pulverförmige Beschichtungsmaterial P1 beziehungsweise P2 in Richtung oder in etwa in Richtung der Erdbeschleunigung g in den Laserstrahl L gebracht wird, kann dieses längst möglich im Laserstrahl L verbleiben und es kann eine gute Aufschmelzung stattfinden.

Abweichend vom Ausführungsbeispiel in der Fig. 4 ist es auch denkbar, dass ein Beschichtungswerkzeug eingesetzt wird, bei dem Pulvermaterialien in zwei Zuführkanälen zugeführt werden können (nicht dargestellt). So können die unterschiedlichen Pulverbestandteile des Beschichtungsmaterials P2 (einerseits Pulverpartikel der Eisenlegierungsmatrix, andrerseits Pulverpartikel aus Wolframkarbid) in unterschiedlichen Zuführsträngen zugeführt werden. Dies ermöglicht insbesondere, diese Pulverpartikel mit unterschiedlich hohen Geschwindigkeiten zuzuführen. Dies bietet den Vorteil, den Schmelzgrad der einzelnen Pulverpartikel bedarfsweise noch genauer einstellen zu können. Vorzugsweise werden die Pulverpartikel aus Wolframkarbid mit einer höheren Geschwindigkeit zugeführt als die Pulverpartikel der Eisenlegierungsmatrix. Somit kann der Aufschmelzgrad des Wolframkarbids geringer gehalten werden als der Schmelzgrad der Eisenlegierungsmatrix.

Es ist abweichend vom Ausführungsbeispiel auch vorstellbar, dass ein Beschichtungswerkzeug eingesetzt wird, welches mehrere Energie- bzw. Laserstrahlen erzeugen kann, die auf das Substrat gerichtet werden. Beispielsweise ist denkbar, dass ein Teil der gesamten eingesetzten Strahlungsenergie ausgekoppelt und zur Erzeugung eines zweiten Laserstrahls genutzt wird. Der zweite Laserstrahl kann dann bevorzugt in Vorlaufrichtung des Beschichtungswerkzeugs vor dem ersten Laserstrahl auf das Substrat auftreffen und so zu einer präzisen, lokalen Vorwärmung des Substrats dienen (nicht näher dargestellt).

Anhand der Fig. 5 ist eine mögliche Strahlungsintensität S des Laserstrahls L über einen Durchmesser D eines Laserspots dargestellt, der sich auf der jeweils zu beschichtenden Oberfläche ausbildet.

Im Ausführungsbeispiel kann ein Laserspot mit einem äußeren Durchmesser D ausgebildet, der in einem Bereich von etwa 2 mm bis etwa 7 mm, bevorzugt in einem Bereich von etwa 3,1 mm bis etwa 7 mm und ganz besonders bevorzugt in einem Bereich von etwa 3,1 mm bis etwa 5 mm liegt. Es ist ersichtlich, dass die Laserintensität S über den gesamten Durchmesser D des Laserspots nahezu konstant bleibt. Die Strahlungsintensität S des Laserstrahls L bildet also ein sogenanntes Top-Hat-Profil (oder auch Rechteckprofil) aus.

Alternativ kann sehr vorteilhaft ein Laserspot mit einem Top-Hat-Ringprofil erzeugt werden, wie es in Fig. 6 dargestellt ist. Die Laserintensität wird dabei in einem mittleren Bereich des Laserspots deutlich reduziert oder auf Null oder nahezu auf Null abgesenkt. Die hat den Vorteil, dass der über den Laserstrahl in die Pulverpartikel eingebrachte Energieeintrag vergleichmäßigt werden kann. Überdies kann dadurch auch der Aufschmelzgrad der Wolframkarbidpartikel weiter reduziert und eine Verringerung der Versprödung in der Aufbauschicht B2 erzielt werden.

Dabei ist zu erwähnen, dass während der Beschichtung das Beschichtungswerkzeug 3 mit einer Zustellbewegung v radial nach außen bewegt wird, die eine Geschwindigkeit von über etwa 90 m/min, vorzugsweise über etwa 100 m/min aufweist.

Ferner werden eine die Zustellbewegung v des Beschichtungswerkzeugs und eine Umdrehungsgeschwindigkeit des Bremskörpers 1 derart aufeinander abgestimmt, dass sich im Lauf einer vollständigen Umdrehung des Bremskörpers 1 um 360 Grad eine Überlappung von einer im Lauf der Umdrehung aufgebrachten Beschichtungsspur zu einer zuvor aufgebrachten Beschichtungsspur ergibt, die in einem Bereich von etwa 70 Prozent bis etwa 95 Prozent, vorzugsweise in einem Bereich von etwa 70 Prozent bis etwa 90 Prozent und besonders bevorzugt in einem Bereich von etwa 70 Prozent bis etwa 84 Prozent liegt. Hierdurch ergibt sich also insgesamt pro Aufbauschicht (B1 bzw. B2) ein schneckenartiger Verlauf der aufgebrachten Schichtspuren.

Wenn die erste Aufbauschicht B1 in gewünschter Weise auf den Grundkörper G aufgebracht ist, so erfolgt die Auftragung der zweiten Schicht B2 auf eine Oberfläche O der ersten Aufbauschicht B1 in entsprechender Weise.

Das Beschichtungswerkzeug 3 wird dabei wiederum radial von innen nach außen zugestellt. Allerdings wird zur Aufbringung der zweiten Aufbauschicht B2 nunmehr das zweite, pulverförmige Beschichtungsmaterial P2 dem Laserstrahl L zugeführt. Auch das zweite, pulverförmige Beschichtungsmaterial liegt bevorzugt in Pulverkörnern mit sphärischer Gestalt vor. Das Material besteht, wie bereits erwähnt aus einem Material mit ähnlicher Zusammensetzung wie die Eisenlegierung 1.4404 und zusätzlichen Wolframkarbidpartikeln.

Abweichend von den Wolframkarbidpartikeln ist es auch denkbar, keramische, metallische Werkstoffe oder Verbundwerkstoffe aus oxidkeramischen, karbidischen oder boridischen Partikeln in der Eisenlegierungsmatrix E einzusetzen. Beispielsweise sind Chromkarbide, Titankarbide oder auch Niobkarbide denkbar. Anstelle der Eisenlegierungsmatrix E können alternativ vor allem Nickelbasislegierungen oder alternative Eisenbasislegierungen genutzt werden.

### Bezugszeichenliste

| | | | |
|---|---|---|---|
| 1 | Bremskörper | Gi | radiale Innenposition |
| 2 | Bremssattel | Ga | radiale Außenposition |
| 3 | Beschichtungswerkzeug | g | Erdbeschleunigung |
| 10a, b | Reibring | K | Kraftfahrzeug |
| 11 | Lüftungszwischenraum | L | Laserstrahl |
| 12 | Reibfläche | m | Pulvermassenstrom |
| 13 | Nabe | n | Drehzahl |
| | | O | Oberfläche |
| A | Anbindungszone | P1 | erstes pulverförmige |
| B | Beschichtung | | Beschichtungsmaterial |
| B1 | erste Aufbauschicht | P2 | zweites pulverförmige |
| B2 | zweite Aufbauschicht | | Beschichtungsmaterial |
| D | Durchmesser | R | Rotationsachse |
| d1 | Dicke | S | Strahlungsintensität |
| d2 | Dicke | SB | Schmelzbad |
| d3 | Dicke | V | Zustellbewegung |
| E | Eisenlegierungsmatrix | W | Wolframkarbidpartikel |
| F | Flächenerstreckung | Y | Horizontalrichtung |
| Fa, Fb | Flächenseite | Z | Hochrichtung |
| G | Grundkörper | | |

## Patentansprüche

1. Bremskörper (1) für ein Kraftfahrzeug (K), mit einem zumindest bereichsweise flächenhaften Grundkörper (G), auf dessen Flächenseiten (Fa, Fb) jeweils zumindest bereichsweise wenigstens zwei Aufbauschichten (B1, B2) aufgebracht sind, wobei durch die Aufbauschichten (B1, B2) eine Oberfläche ausgebildet wird, die im Montagezustand des Bremskörpers (1) am Kraftfahrzeug (K) als Reibfläche (12) für einen Bremsbelag dient, wobei eine Anbindungszone (A) besteht, in der sowohl ein Material des Grundkörpers (G) als auch ein Material einer an diesen angrenzenden Aufbauschicht (B1) vorhanden sind, wobei eine erste Aufbauschicht (B1) vorhanden ist, die an den Grundkörper (G) angrenzt und eine zweite Aufbauschicht (B2), die auf die erste Aufbauschicht (B1) aufgebracht ist, wobei die zweite Aufbauschicht (B2) aus einem Verbund aus einer Eisenlegierungsmatrix (E) mit eingelagerten Wolframkarbidpartikeln (W) besteht, **dadurch gekennzeichnet, dass** das Volumen der eingelagerten Wolframkarbidpartikeln (W) zum Volumen der Eisenlegierungsmatrix (E) einen Anteil in einem Bereich von 1 % bis 19 % aufweist.

2. Bremskörper (1) nach Anspruch 1, **dadurch gekennzeichnet, dass** die Anbindungszone (A) eine Dicke (d3) senkrecht zu einer Flächenerstreckung (F) einer Flächenseite (Fa, Fb) aufweist, die unter 10 µm beträgt.

3. Bremskörper (1) nach Anspruch 1 oder 2, **dadurch gekennzeichnet, dass**, senkrecht zu einer Flächenerstreckung (F) einer Flächenseite (Fa, Fb) gesehen, die erste Aufbauschicht (B1) eine Dicke (d1) in einem Bereich von 50 µm bis 350 µm aufweist.

4. Bremskörper (1) nach einem der vorhergehenden Ansprüche, **dadurch gekennzeichnet, dass** die zweite Aufbauschicht (B2) eine Dicke (d2) in einem Bereich von 60 µm bis 420 µm aufweist.

5. Bremskörper (1) nach einem der vorhergehenden Ansprüche, **dadurch gekennzeichnet, dass** die erste Aufbauschicht (B1) aus einem austenitischen Chrom-Nickel-Molybdän-Stahl besteht.

6. Bremskörper (1) nach einem der vorhergehenden Ansprüche, **dadurch gekennzeichnet, dass** das Material der ersten Aufbauschicht (B1) solche Werkstoffeigenschaften aufweist, wie sie dem Werkstoff 1.4404 nach der Norm EN10027-2 oder dem Werkstoff 316L nach der Norm AISI entsprechen.

7. Bremskörper (1) nach einem der vorhergehenden Ansprüche, **dadurch gekennzeichnet, dass** die Eisenlegierungsmatrix (E) aus einem Material besteht, welches solche Werkstoffeigenschaften besitzt, wie sie dem Werkstoff 1.4404 nach der Norm EN10027-2 oder dem Werkstoff 316L nach der Norm AISI entsprechen.

8. Verfahren zur Herstellung eines Bremskörpers (1) nach einem der vorhergehenden Ansprüche, wobei in einem ersten Verfahrensschritt mittels wenigstens einer Energiequelle wenigstens ein Energiestrahl auf eine Flächenseite (Fa, Fb) des Grundkörpers (G) des Bremskörpers (1) gerichtet und ein erstes, pulverförmiges Beschichtungsmaterial (P1) einer durch den Energiestrahl beaufschlagten Position zugeführt wird, um das erste Beschichtungsmaterial (P1) aufzuschmelzen und die Flächenseite (Fa, Fb) des Grundkörpers (G) mit einer ersten Aufbauschicht (B1) zu beschichten, wobei nach Aufbringung der ersten Aufbauschicht (B1) in einem zweiten Verfahrensschritt mittels der wenigstens einen Energiequelle wenigstens ein Energiestrahl auf eine Oberfläche (O) der ersten Aufbauschicht (B1) gerichtet und ein zweites, pulverförmiges Beschichtungsmaterial (P2) einer durch den Energiestrahl beaufschlagten Position zugeführt wird, um das zweite Beschichtungsmaterial (P2) aufzuschmelzen und die erste Aufbauschicht (B1) mit einer zweiten Aufbauschicht (B2) zu beschichten, **dadurch gekennzeichnet, dass** das pulverförmige Beschichtungsmaterial (P1, P2) mit einem solchen Pulvermassenstrom (m) zugeführt wird, der in einem Bereich von 225 g/min bis 400 g/min liegt.

9. Verfahren nach Anspruch 8, **dadurch gekennzeichnet, dass** eine Strahlungsintensität (S) des Energiestrahls für beide Aufbauschichten (B1, B2) in einem Bereich von 700 W/mm² bis 1700 W/mm² gehalten wird.

10. Verfahren nach Anspruch 8 oder 9, **dadurch gekennzeichnet, dass** der Energiestrahl derart auf das jeweilige Substrat abgegeben wird, das sich auf der Auftrefffläche des Energiestrahls auf dem jeweiligen Substrat ein Laserspot mit einem äußeren Durchmesser (D) in einem Bereich von 2 mm bis 7 mm ergibt.

11. Verfahren nach einem der vorhergehenden Ansprüche 8 bis 10, **dadurch gekennzeichnet, dass** die Aufbringung der Aufbauschichten (B1, B2) durch eine radial von innen nach außen verlaufende Zustellbewegung (v) eines Beschichtungswerkzeugs (3) erfolgt.

12. Verfahren nach Anspruch 11, **dadurch gekennzeichnet, dass** die radiale Zustellbewegung (v) des Beschichtungswerkzeugs (3) in einer Geschwindigkeit erfolgt, die über 90 m/min liegt.

13. Verfahren nach einem der vorhergehenden Ansprüche 8 bis 12, **dadurch gekennzeichnet, dass** eine radiale Zustellbewegung (v) des Beschichtungswerkzeugs (3) und eine Umdrehungsgeschwindigkeit des Bremskörpers (1) derart aufeinander abgestimmt werden, dass sich im Lauf einer vollständigen Umdrehung des Bremskörpers (1) eine Überlappung von einer im Lauf der Umdrehung aufgebrachten Beschichtungsspur zu einer zuvor aufgebrachten Beschichtungsspur in einem Bereich von 70 % bis 95 % ergibt.

14. Verfahren nach einem der vorhergehenden Ansprüche 8 bis 13, **dadurch gekennzeichnet, dass** die Energiequelle zur Erzeugung des Energiestrahls mit einer Leistung in einem Bereich zwischen 6 kW und 30 kW, bevorzugt in einem Bereich zwischen 8 kW und 22 kW betrieben wird.

15. Verfahren nach einem der vorhergehenden Ansprüche 8 bis 14, **dadurch gekennzeichnet, dass** bei der Erzeugung der zweiten Aufbauschicht (B2) durch das zweite, pulverförmige Beschichtungsmaterial (P2), ein die Wolframkarbidpartikel enthaltendes Pulvermaterial und ein die Partikel der Eisenlegierungsmatrix enthaltende Pulvermaterial getrennt zugeführt werden, wobei das die Wolframkarbidpartikel enthaltende Pulvermaterial mit einer höheren Geschwindigkeit zugeführt wird als das die Partikel der Eisenlegierungsmatrix enthaltende Pulvermaterial.
